# EUROPÄISCHE PATENTSCHRIFT

(11) **EP 2 813 348 B1**
(45) Veröffentlichungstag und Bekanntmachung des Hinweises auf die Patenterteilung: **13.06.2018**
(21) Anmeldenummer: 14170063.3
(22) Anmeldetag: 27.05.2014
(51) Int. Cl.: B29C 65/20, B29C 53/02

(54) **Maschine zur thermischen Bearbeitung von Kunststoffwerkstücken**
Machine for thermal processing of plastic workpieces
Machine destinée au traitement thermique de pièces à usiner en plastique

(30) Priorität: 12.06.2013 DE 202013005290 U
(43) Veröffentlichungstag der Anmeldung: 17.12.2014
(73) Patentinhaber: Wegener International GmbH, 52249 Eschweiler (DE)
(72) Erfinder: Dietrich, Michael, 52224 Stollberg (DE)
(74) Vertreter: Albrecht, Ralf

(56) Entgegenhaltungen:
- EP-A2- 0 839 633
- WO-A1-2004/058486
- DE-U1- 9 214 334
- DE-U1- 9 214 573
- US-A- 2 487 495

## Beschreibung

Die Erfindung betrifft eine Maschine zur thermischen Bearbeitung von Kunststoffwerkstücken, insbesondere von Kunststoffplatten, mit einer Aufnahme für das Kunststoffwerkstück bzw. die Kunststoffwerkstücke und mit zumindest einem Heizschwert, welches zwischen einer Warteposition außerhalb des Bereichs der Werkstückaufnahme und einer Heizposition im Bereich der Werkstückaufnahme bewegbar geführt ist und welche zwei einander abgewandte Seitenflächen sowie eine Ober- und Unterseite aufweist, wobei im Bereich der Warteposition eine Abdeckeinrichtung zur Abdeckung des Heizschwertes in der Warteposition vorgesehen ist, wobei die Abdeckeinrichtung zwei beidseits des Heizschwertes angeordnete Isolierleisten aufweist, die mittels eines Antriebes aus einer zum Heizschwert beabstandeten Ausgangsposition in eine Isolierposition bewegbar sind.

Eine solche Maschine ist in Form einer Stumpfschweißmaschine aus der DE 92 14 573 U1 bekannt. Sie hat einen lang gestreckten Grundrahmen, auf dessen Oberseite zwei sich jeweils in Längsrichtung parallel erstreckende Spanneinrichtung angeordnet sind. Diese Spanneinrichtungen sind in Querrichtung synchron, jedoch gegenläufig bewegbar und bestehen im Wesentlichen jeweils aus einem sich in Längsrichtung erstreckenden Spanntisch als Werkstückaufnahme und einem darüber angeordneten, sich ebenfalls in Längsrichtung erstreckenden und mit dem Spanntisch fest verbundenen Spannbalken, wobei jeder Spannbalken mit einer Vielzahl von in Längsrichtung nebeneinander angeordneten, auf den zugehörigen Spanntisch absenkbaren Spannplatten versehen ist.

Im Bereich zwischen den beiden Spanneinrichtungen ist ein sich in Längsrichtung erstreckendes Heizschwert für die Erhitzung der miteinander zu verbindenden Stirnseiten von Kunststoffwerkstücken angeordnet. Das Heizschwert kann zwischen einer Warteposition unterhalb der Spanntische, also unterhalb einer von den Spanntischen gebildeten Spannebene, und einer Heizposition bewegbar geführt, in der sich das Heizschwert auf Höhe der Spanntische und damit in der Spannebene erstreckt und dabei über die Ebene der Spanntische so weit hinausragt, dass die Stirnseiten der Kunststoffwerkstücke durch gegenläufige Bewegung der Spanntische an den Seitenflächen des Heizschwertes in Anlage gebracht werden können. Unterhalb des Heizschwertes ist zusätzlich ein Anschlagbalken vorgesehen.

Ein Schweißvorgang auf einer solchen Stumpfschweißmaschine wird dadurch eingeleitet, dass die Spanneinrichtungen gegen den in den Spalt eingefahrenen Anschlagbalken verfahren werden, wobei sie jeweils an verbreiterten Abschnitten zur Anlage kommen und auf diese Weise den Anschlagbalken zusätzlich ausrichten. Es werden dann die Kunststoffwerkstücke in die Spanneinrichtungen derart eingelegt, dass sie an den Anschlagbalken stoßen. Nach Festklemmen der Kunststoffwerkstücke - es kann sich auch um ein einzelnes, dann rohrförmiges Werkstück handeln - durch Absenken der Spannplatten gegen den jeweiligen Spanntisch werden die Spanneinrichtungen auseinandergefahren und wird das Heizschwert so weit abgesenkt, dass es in der Spannebene liegt. Die Spanneinrichtungen werden anschließend wieder zueinander bewegt, bis die Kunststoffwerkstücke mit ihren zu verbindenden Stirnseiten an dem Heizschwert anliegen. Die Stirnseiten werden dann an dem Heizschwert erhitzt und nach Wegfahren des Heizschwertes in die Warteposition unter Aufbringung eines Schließdruckes durch die Spanneinrichtungen gegeneinander gepresst. Nach dem Erkalten ist die Verbindung zwischen den Kunststoffwerkstücken fertig.

Maschinen zur thermischen Bearbeitung von Kunststoffwerkstücken mithilfe zumindest eines Heizschwertes sind auch in Form von Biegemaschinen bekannt. Solche Biegemaschinen weisen als Werkstückaufnahme eine horizontale Werkstückauflage auf. Am Ende der Werkstückaufnahme befindet sich eine Biegeeinrichtung, die aus einer Klemmeinrichtung zum Festklemmen des nicht zu verbiegenden Teils des Kunststoffwerkstückes und einer schwenkbar gelagerten, leistenförmigen Biegewange besteht, mit der der umzubiegende Teil des Kunststoffwerkstückes durch Verschwenken der Biegewange aufwärts gebogen werden kann (vgl. DE 295 15 719 U1, DE 92 14 576 U1, EP 0 426 065 A2). Statt einer einzigen Biegewange kann die Werkstückaufnahme auch zwei gegenläufig arbeitende Biegewangen aufweisen (vgl. EP 0 456 121 A1).

Der Biegeeinrichtung zugeordnet ist ein Heizschwert, das aus einer Warteposition im Abstand zum in der Werkstückaufnahme befindlichen Kunststoffwerkstück in eine Heizposition gebracht werden kann, in der das Heizschwert an der vorgesehenen Biegelinie Kontakt zu dem Werkstück hat. Nach Plastifizierung der Biegelinie wird die Biegewange verschwenkt und nimmt dabei dem umzubiegenden Teil des Werkstückes mit. Statt nur eines Heizschwertes können auch zwei gegenüberliegende Heizschwerter vorgesehen sein, um das Kunststoffwerkstück im Bereich der vorgesehenen Biegelinie von beiden Seiten zu erhitzen (vgl. EP 0 456 121 A1).

Bei der Stumpfschweißmaschine gemäß der DE 92 14 573 U1 ist im Bereich der Warteposition eine Abdeckeinrichtung in Form eines Heizschwertgehäuses vorgesehen. Dieses hat eine Öffnung, durch die das Heizschwert bei der Bewegung in die Warteposition in das Heizschwertgehäuse einfahrbar und für die Bewegung in die Heizposition herausfahrbar ist. Mithilfe des Heizschwertgehäuses soll der Energieverbrauch des Heizschwertes in den Pausen zwischen den Aufheizvorgängen herabgesetzt werden. Außerdem soll das Entstehen einer nach oben gerichteten Konvektionsströmung und damit eine vorzeitige Erwärmung der Kunststoffwerkstücke vermieden werden. In der Praxis hat sich allerdings gezeigt, dass dies nur unvollkommen gelingt.

Der Erfindung liegt folglich die Aufgabe zugrunde, bei einer Maschine zur thermischen Bearbeitung von Kunststoffwerkstücken mittels zumindest eines Heizschwertes eine verbesserte Abdeckung des Heizschwertes in der Warteposition zu verwirklichen.

Diese Aufgabe wird erfindungsgemäß dadurch gelöst, dass in der Isolierposition die Isolierleisten an den Seitenflächen des Heizschwertes anliegen und dabei die Seitenflächen zumindest im Wesentlichen vollständig abdecken. Grundgedanke der Erfindung ist es folglich, Isolierleisten vorzusehen, die aus einer Ausgangsposition in Anlage an die Seitenflächen des Heizschwertes gebracht werden können, wobei die Isolierleisten so dimensioniert sind, dass sie die Seitenflächen zumindest im Wesentlichen vollständig abdecken. Es hat sich gezeigt, dass hierdurch ein Wärmeabfluss an die Umgebungsluft wesentlich besser verhindert werden kann als mit der vorbekannten Lösung, selbst wenn die Ober- und Unterseiten des Heizschwertes unbedeckt bleiben. Das Entstehen einer für die Kunststoffwerkstücke schädlichen Konvektionsströmung konnte vermieden werden. Hierdurch konnte die Qualität der Schweißnaht und deren Reproduzierbarkeit deutlich verbessert werden. Außerdem wird in erheblichem Umfang elektrische Energie eingespart.

Es versteht sich, dass dann, wenn Maschinen der gattungsgemäßen Art mehrere Heizschwerter aufweisen, jedem Heizschwert eine Abdeckeinrichtung der erfindungsgemäßen Ausbildung zugeordnet wird. Im Übrigen umfasst der Grundgedanke der Erfindung auch solche Maschinen, bei denen das Heizschwert nicht in Anlage zu dem thermisch zu bearbeitenden Kunststoffwerkstück kommt, sondern die Erhitzung des Kunststoffwerkstückes über von dem Heizschwert ausgehende Wärmestrahlung erfolgt.

Die erfindungsgemäße Abdeckeinrichtung kann bei Stumpfschweißmaschinen vorgesehen werden, die zum Verschweißen der Stirnseiten von Kunststoffwerkstücken, insbesondere von Kunststoffplatten oder zur Ausbildung von Kunststoffrohren, bestimmt sind. Eine solche Stumpfschweißmaschine ist mit zwei gegenüberliegenden, einen Spalt zwischen sich ausbildenden und relativ zueinander beweglichen Spanneinrichtungen zum Fixieren und zum Zusammenführen der zu verschweißenden Kunststoffwerkstücke in einer Spannebene ausgebildet, wobei das zumindest eine Heizschwert sich längs des Spaltes erstreckt. In der Warteposition befindet sich das Heizschwert dann außerhalb der Spannebene und in der Heizposition im Bereich der Spannebene.

Stattdessen kann die Maschine auch als Biegemaschine zum Biegen eines plattenförmigen Kunststoffwerkstückes um eine Biegelinie ausgebildet sein, wobei die Biegemaschine eine Biegeeinrichtung aufweist, der das Heizschwert derart zugeordnet ist, dass in deren Heizposition das Kunststoffwerkstück im Bereich der Biegelinie erhitzbar ist. Bei solchen Biegemaschinen war es bisher nicht bekannt, eine Abdeckeinrichtung für das Heizschwert vorzusehen, um Wärmeverluste und Konvektionsströmungen zu vermeiden, wenn sich das Heizschwert in der Warteposition befindet. Mithilfe der erfindungsgemäßen Abdeckeinrichtung können auch bei einer Biegemaschine Wärmeverluste und schädliche Konvektionsströmungen vermieden werden. Dies gilt insbesondere dann, wenn - wie bei der Biegemaschine nach der EP 0 456 121 A1 - zwei Heizschwerter vorhanden sind.

In Ausbildung der Erfindung ist vorgesehen, dass die Isolierleisten heizschwertseitig mit einem temperaturbeständigen Isoliermaterial, zum Beispiel bestehend aus Polytetrafluoräthylen, aufweisen. Damit das Isoliermaterial über die Länge des Heizschwertes starr geführt ist, sollte es auf seinen dem Heizschwert abgewandten Seiten von einer Halterung eingefasst sein.

Für die Bewegung der Isolierleisten zwischen der Ausgangsposition und der Isolierposition kommt es nicht wesentlich auf die Art des Antriebes an. Ein besonders einfacher Antrieb ergibt sich jedoch, wenn zumindest ein Linearantrieb, beispielsweise in Form eines Pneumatikzylinders vorgesehen ist. Vorzugsweise sollte jeder Isolierleiste jeweils ein Linearantrieb zugeordnet sein. Die Linearantriebe haben zweckmäßigerweise einen Linearhub, dessen Richtung sich senkrecht zu den beiden Seitenflächen des Heizschwertes erstreckt.

Zur Abdeckung auch der Ober- und Unterseiten des in der Warteposition befindlichen Heizschwertes kann es vorteilhaft sein, wenn die Isolierleisten oben- und/oder untenseitig Vorsprünge aufweisen, die in der Isolierposition die Ober- und Unterseiten des Heizschwertes zumindest teilweise, vorzugsweise vollständig abdecken.

In der Zeichnung ist die Erfindung anhand eines Ausführungsbeispiels näher veranschaulicht. Es zeigen:
- Figur 1: eine stirnseitige Ansicht einer erfindungsgemäßen Stumpfschweißmaschine;
- Figur 2: einen Ausschnitt der Darstellung der Stumpfschweißmaschine gemäß Figur 1 mit dem Heizschwert in Schweißposition und
- Figur 3: den Ausschnitt gemäß Figur 2 mit dem Heizschwert in Warteposition.

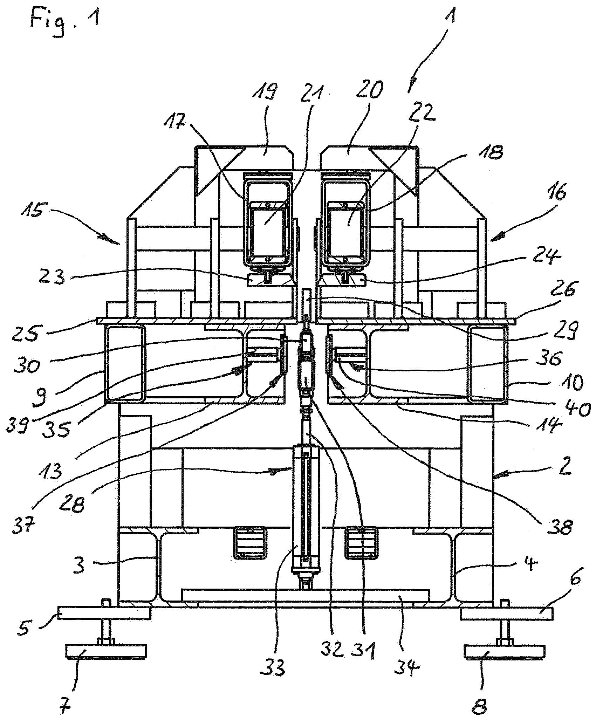

Die Stumpfschweißmaschine 1 gemäß Figur 1 hat einen sich senkrecht zur Zeichnungsebene lang erstreckenden Grundrahmen 2, der sich untenseitig auf zwei sich ebenfalls senkrecht zur Zeichnungsebene erstreckenden I -Trägern 3, 4 abstützt. Deren Erstreckung ist im Wesentlichen gleich der Erstreckung des Grundrahmens 2. Die I-Träger 3, 4 stützen sich auf eine Mehrzahl von Fußplatten 5, 6 ab, die von darunter angeordneten Maschinenfüßen 7, 8 getragen werden.

Auf den Maschinenrahmen aufgesetzt sind außenseitige Tischrohre 9, 10 rechteckigen Querschnitts, die sich senkrecht zur Zeichnungsebene über die gesamte Länge der Stumpfschweißmaschine 1 erstrecken. Im inneren Bereich verlaufen auf gleicher Höhe zwei als I-Träger ausgebildete Tischträger 13, 14, deren Erstreckung senkrecht zur Zeichnungsebene der der Tischrohre 9, 10 entspricht. Jeweils ein Paar aus Tischrohr 9, 10 und Tischträger 13, 14 bilden die Unterstützung einer der beiden Spanneinrichtungen 15, 16.

Die Spanneinrichtungen 15, 16 erstrecken sich senkrecht zur Zeichnungsebene über die gesamte Stumpfschweißmaschine 1. Sie weisen obenseitig Spannbalken 17, 18 auf, die als Hohlprofile mit rechteckigem Querschnitt ausgebildet sind und an Niederhaltern 19 bzw. 20 aufgehängt sind. Die Spannbalken 17, 18 verlaufen parallel zueinander auf gleicher Höhe. Innerhalb der Spannbalken 17, 18 sind über deren Länge gleichmäßig verteilt eine Vielzahl von Pneumatikzylindern 21, 22 angeordnet, an deren Kolbenstangen untenseitig jeweils ein Spannteller 23, 24 aufgehängt ist. Mithilfe der Pneumatikzylinder 21, 22 können die Spannteller 23, 24 vertikal aus der in Figur 1 dargestellten angehobenen Stellung in eine abgesenkte Stellung verfahren werden.

Untenseitig haben die Spanneinrichtungen 15, 16 jeweils den Spanntellern 23, 24 gegenüberliegende Spanntischplatten 25, 26. Jede dieser Spanntischplatten 25, 26 ruht verschieblich jeweils auf einem Paar, bestehend aus einem Tischrohr 9, 10 und einem Tischträger 13, 14. Die Spanntischplatten 25, 26 sind über die an ihnen befestigten Niederhaltern 19 bzw. 20 mit dem jeweils zugehörigen Spannbalken 17 bzw. 18 starr verbunden, bilden also mit diesem jeweils eine Einheit. Über hier nicht näher dargestellte Antriebseinrichtungen, wie sie beispielsweise in der DE 92 14 573 U1 im Einzelnen dargestellt ist, können die beiden Spanneinrichtungen 15, 16 synchron und jeweils in entgegengesetzten Richtungen horizontal aufeinander zu oder voneinander weg bewegt werden.

In der Mitte der Stumpfschweißmaschine 1 ist eine Heizschwerteinrichtung 28 angeordnet. Das obere Ende der Heizschwerteinrichtung 28 wird von einem im Querschnitt rechteckigen, langgestreckten Heizschwert 29 gebildet, das sich senkrecht zur Zeichnungsebene im Wesentlichen über die gesamte Erstreckung der beiden Spanneinrichtungen 15, 16 erstreckt. Es sitzt auf einem Anschlagbalken 30, dessen Längserstreckung dem des Heizschwertes 29 entspricht. Dieser wiederum ist aufgesetzt auf einen Tragholm 31, der auf mehreren, senkrecht zur Zeichnungsebene hintereinander angeordneten Führungsstangen 32 ruht, deren untere Enden jeweils mit einem Pneumatikzylinder 33 verbunden sind. Deren untere Enden stützen sich auf einer Rahmenplatte 34 ab, die an den I-Trägern 3, 4 befestigt ist. Durch pneumatische Beaufschlagung der Pneumatikzylinder 33 kann das Heizschwert 29 vertikal verfahren werden, wobei es seine horizontale Erstreckung beibehält.

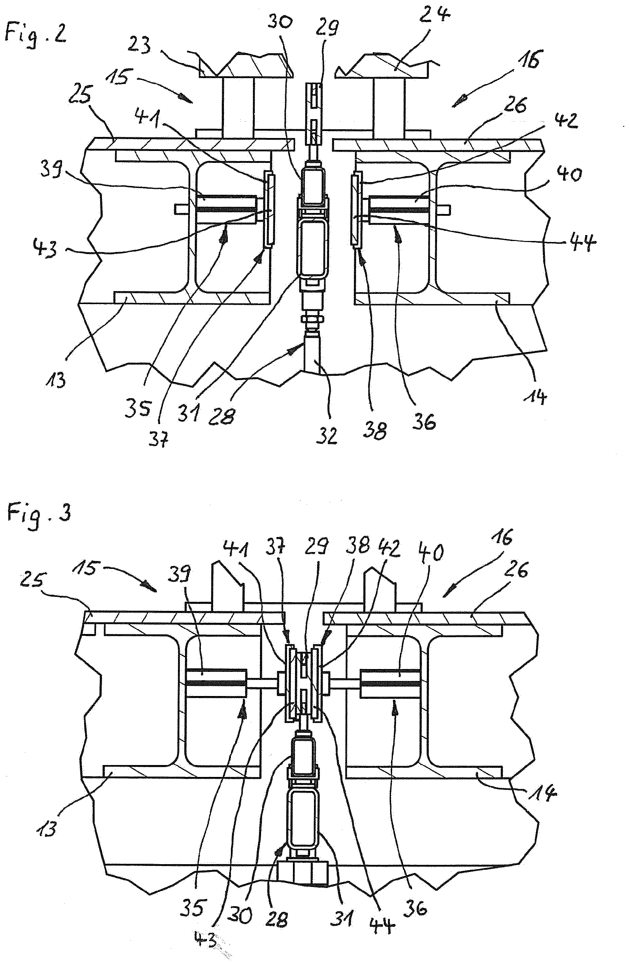

An den Tischträgern 13, 14 sind Abdeckelemente 35, 36 befestigt, die spiegelbildlich und auf gleicher Höhe angeordnet sind. Wie sich insbesondere aus den Figuren 2 und 3 ersehen lässt, weist jedes Abdeckelement 35, 36 eine Isolierleiste 37, 38 auf. Jede Isolierleiste 37, 38 erstreckt sich senkrecht zur Zeichnungsebene über die Länge des Heizschwertes 29. Die Isolierleisten 37, 38 sind jeweils über eine senkrecht zur Zeichnungsebene gleichmäßig verteilte Mehrzahl von Pneumatikzylindern 39, 40 mit den Tischträgern 13 bzw. 14 verbunden. Die Isolierleisten 37, 38 sind an den Kolbenstangen der Pneumatikzylinder 39, 40 befestigt. Jede Isolierleiste 37, 38 hat eine im Querschnitt U-förmige Trägerleiste 41 bzw. 42, auf deren einander zugewandten Seiten Isoliermaterial 43, 44 aus Polytetrafluoräthylen aufgebracht und befestigt ist. Mithilfe der Pneumatikzylinder 39, 40 können die Isolierleisten 37, 38 aus der in den Figuren 1 und 2 dargestellten Ausgangspositionen gegenläufig in die in Figur 3 dargestellte Isolierposition und wieder zurück verfahren werden.

In den Darstellungen gemäß den Figuren 1 und 2 befindet sich das Heizschwert 29 in der Heizposition zwischen den Spanntischplatten 25, 26 und ragt über diese nach oben heraus. Die Isolierleisten 37, 38 nehmen ihre Ausgangsposition ein. In der Darstellung gemäß Figur 3 ist das Heizschwert mithilfe der Pneumatikzylinder 33 in seine Warteposition unterhalb der Spanntischplatten 25, 26 heruntergefahren. Die Kolben der Pneumatikzylinder 39, 40 der Abdeckelemente 35, 36 sind durch deren Luftdruckbeaufschlagung so weit ausgefahren worden, dass das Isoliermaterial 33, 34 der Isolierleisten 37, 38 in Anlage an den Seitenflächen des Heizschwertes 29 gebracht sind. In dieser Konstellation wird ein Wärmeabfluss von den Seitenflächen auf die Umgebungsluft und damit eine Konvektionsströmung nach oben vermieden.

Das Verschweißen von zwei Kunststoffplatten geschieht mithilfe der vorbeschriebenen Stumpfschweißmaschine wie folgt.

Zunächst werden die Spanneinrichtungen 15, 16 mittels des hier nicht näher dargestellten Antriebes auseinandergefahren, sodass sie die in den Figuren 1 und 2 gezeigte Stellung einnehmen. Dann wird das Heizschwert 31 aus der in Figur 3 gezeigten Warteposition so weit hochgefahren, dass sich der untere verbreiterte Teil der Anschlagbalken 30 auf Höhe der Spanntischplatten 25, 26 befindet. Diese Position ist also höher als die in den Figuren 1 und 2 dargestellte Position. Die Spanneinrichtungen 15, 16 werden dann so weit zusammengefahren, bis die gegenüberliegenden Stirnseiten der Spanntischplatten 25, 26 zur Anlage an dem Anschlagbalken 30 kommen. Über den Antrieb wird dann ein Schließdruck aufgebracht, der den Anschlagbalken 30 gerade ausrichtet.

Im Anschluss daran wird von beiden Seiten je eine Kunststoffplatte auf jeweils eine Spanntischplatte 25 bzw. 26 aufgelegt. Sie werden so weit vorgeschoben, bis sie an dem oberen, nicht verbreiterten Teil des Anschlagbalkens 30 zur Anlage kommen. Die Kunststoffplatten stehen dann über die Stirnseiten der Spanntischplatten 25, 26 jeweils ein Stück vor.

Nunmehr werden die Spannteller 23, 24 durch Druckbeaufschlagung der Pneumatikzylinder 21, 22 auf die Kunststoffplatten abgesenkt, sodass diese jeweils zwischen Spanntellern 23 bzw. 24 und jeweils einer Spanntischplatte 25 bzw. 26 eingeklemmt werden. Sie können sich dann nicht mehr relativ zu den jeweils betreffenden Spanneinrichtungen 15, 16 bewegen. Nach diesem Ausrichtvorgang werden die Spanneinrichtungen 15, 16 durch Betätigung des zugehörigen Antriebs wieder auseinandergefahren. Gleichzeitig werden Heizschwert 29 und Anschlagbalken 30 in die in den Figuren 1 und 2 gezeigte Stellung abgesenkt, sodass das Heizschwert 29 in die Spannebene zwischen den Spanntischplatten 25, 26 zu liegen kommt. Dann werden die Spanneinrichtungen 15, 16 wieder einander angenähert, bis die Stirnseiten der eingelegten Kunststoffplatten an den Seitenflächen des Heizschwertes 29 anstoßen. Das Heizschwert 29 befindet sich auf einer Temperatur, die hoch genug ist, um die Stirnseiten der Kunststoffplatten zu plastifizieren. Ist dieser Zustand erreicht, werden die Spanneinrichtungen 15, 16 wieder ein Stück auseinandergefahren, und es wird das Heizschwert 29 durch entsprechende Druckbeaufschlagung der Pneumatikzylinder 33 in die in Figur 3 dargestellte Warteposition heruntergefahren. Dann werden die Spanneinrichtungen 15, 16 wieder so weit angenähert, dass die Stirnseiten der Kunststoffplatten mit einem bestimmten Schließdruck aufeinander gepresst werden. Unmittelbar nach Erreichen der Warteposition des Heizschwertes 29 werden die Isolierleisten 37, 38 in Anlage an die Seitenflächen des Heizschwertes 29 durch Druckbeaufschlagung der Pneumatikzylinder 39, 40 angelegt und verhindern hierdurch den Wärmeabfluss über die Seitenflächen. Diese Position ist in Figur 3 dargestellt.

Nach Erkalten der Schweißnaht werden die Spannteller 23, 24 unter entsprechender Druckbeaufschlagung der Pneumatikzylinder 21, 22 wieder in die in den Figuren 1 und 2 dargestellte Ausgangsposition angehoben. Die dann einheitliche Kunststoffplatte kann dann zur Seite hin aus der Stumpfschweißmaschine 1 entnommen werden.

## Patentansprüche

1. Maschine (1) zur thermischen Bearbeitung von Kunststoffwerkstücken aus thermoplastischem Kunststoff, insbesondere von Kunststoffplatten, mit einer Aufnahme für das Kunststoffwerkstück bzw. die Kunststoffwerkstücke und mit zumindest einem Heizschwert (29), welches zwischen einer Warteposition außerhalb des Bereichs der Werkstückaufnahme und einer Heizposition im Bereich der Werkstückaufnahme bewegbar geführt ist und welches zwei einander abgewandte Seitenflächen sowie eine Ober- und Unterseite aufweist, wobei im Bereich der Warteposition eine Abdeckeinrichtung (35, 36) zur Abdeckung des Heizschwertes (29) in der Warteposition vorgesehen ist, wobei die Abdeckeinrichtung zwei beidseits des Heizschwertes (29) angeordnete Isolierleisten (37, 38) aufweist, die mittels eines Antriebes (39, 40) aus einer zum Heizschwert (29) beabstandeten Ausgangsposition in eine Isolierposition bewegbar sind, **dadurch gekennzeichnet, dass** die Isolierleisten (37, 38) in der Isolierposition an den Seitenflächen des Heizschwertes (29) anliegen und dabei die Seitenflächen zumindest im Wesentlichen vollständig abdecken.

2. Maschine nach Anspruch 1, **dadurch gekennzeichnet, dass** die Maschine als Stumpfschweißmaschine (1) zum Verschweißen der Stirnseiten von Kunststoffwerkstücken ausgebildet ist, die mit zwei gegenüberliegenden, einen Spalt zwischen sich ausbildenden und relativ zueinander beweglichen Spanneinrichtungen (15, 16) zum Fixieren und zum Zusammenführen der zu verschweißenden Kunststoffwerkstücke in einer Spannebene ausgebildet ist, wobei das zumindest eine Heizschwert (29) sich längs des Spaltes erstreckt und sich in der Warteposition außerhalb der Spannebene und in der Heizposition im Bereich der Spannebene befindet.

3. Maschine nach Anspruch 1, **dadurch gekennzeichnet, dass** die Maschine als Biegemaschine zum Biegen eines plattenförmigen Kunststoffwerkstücks um eine Biegelinie ausgebildet ist, wobei die Biegemaschine eine Biegeeinrichtung aufweist, der das Heizschwert oder zwei gegenüberliegende Heizschwerter derart zugeordnet ist bzw. sind, dass in der Heizposition das Kunststoffwerkstück im Bereich der Biegelinie erhitzbar ist.

4. Maschine nach einem der Ansprüche 1 bis 3, **dadurch gekennzeichnet, dass** die Isolierleisten (37, 38) heizschwertseitig mit Isoliermaterial (43, 44), bestehend insbesondere aus Polytetrafluoräthylen, aufweisen.

5. Maschine nach Anspruch 4, **dadurch gekennzeichnet, dass** das Isoliermaterial (43, 44) auf seinen dem Heizschwert (29) abgewandten Seiten von einer Halterung (41, 42) eingefasst ist.

6. Maschine nach einem der Ansprüche 1 bis 5, **dadurch gekennzeichnet, dass** als Antrieb zumindest ein Linearantrieb, insbesondere ein Pneumatikzylinder (39, 40), vorgesehen ist.

7. Maschine nach einem der Ansprüche 1 bis 6, **dadurch gekennzeichnet, dass** für jede Isolierleiste (37, 38) jeweils ein Linearantrieb (39, 40) vorgesehen ist.

8. Maschine nach Anspruch 7, **dadurch gekennzeichnet, dass** die Linearantriebe (39, 40) einen Linearhub aufweisen, dessen Richtung sich senkrecht zu den beiden Seitenflächen des Heizschwertes (29) erstreckt.

9. Maschine nach einem der Ansprüche 1 bis 8, **dadurch gekennzeichnet, dass** die Isolierleisten (37, 38) oben- und/oder untenseitig Vorsprünge aufweisen, die in der Isolierposition die Ober- und Unterseiten des in der Warteposition befindlichen Heizschwertes (29) zumindest teilweise, vorzugsweise vollständig abdecken.

## Claims

1. Machine (1) for the thermal processing of plastic workpieces made of thermoplastic material, in particular plastic sheets, with a holder for the plastic workpiece or workpieces and at least one heating blade (29) which is movably guided between a waiting position outside the region of the workpiece holder and a heating position in the region of the workpiece holder and which has two side surfaces facing away from one another and an upper and lower side, a covering device (35, 36) for covering the heating blade (29) in the waiting position being provided in the region of the waiting position, the covering device having two insulating strips (37, 38) arranged on both sides of the heating blade (29), which are movable by means of a drive (39, 40) from a starting position spaced from the heating blade (29) into an insulating position, **characterized in that** the insulating strips (37, 38) lie against the side surfaces of the heating blade (29) in the insulating position and thereby cover the side surfaces at least substantially completely.

2. Machine according to claim 1, **characterized in that** the machine is designed as a butt welding machine (1) for welding the end faces of plastic workpieces, which is provided with two opposing clamping devices (15, 16) for fixing and joining the plastic workpieces to be welded in a clamping plane, the clamping devices (15, 16) forming a gap between them and being movable relatively to each other, wherein the at least one heating blade (29) extends along the gap and is positioned outside the clamping plane in the waiting position and inside the region of the clamping plane in the heating position.

3. Machine according to claim 1, **characterized in that** the machine is designed as a bending machine for bending a plate-shaped plastic workpiece around a bending line, wherein the bending machine has a bending device to which the heating blade is or two opposing heating blades are assigned such that in the heating position the plastic workpiece can be heated in the region of the bending line.

4. Machine according to one of claims 1 to 3, **characterized in that** the insulating strips (37, 38) have insulating material (43, 44) on the heating blade side consisting in particular of polytetrafluoroethylene.

5. Machine according to claim 4, **characterized in that** the insulating material (43, 44) is enclosed on its sides facing away from the heating blade (29) by a holder (41, 42).

6. Machine according to one of claims 1 to 5, **characterized in that** at least one linear drive, in particular a pneumatic cylinder (39, 40), is provided as drive.

7. Machine according to one of claims 1 to 6, **characterized in that** one linear drive (39, 40) is provided for each insulating strip (37, 38).

8. Machine according to claim 7, **characterized in that** the linear drives (39, 40) have a linear stroke whose direction extends vertically to the two side faces of the heating blade (29).

9. Machine according to one of claims 1 to 8, **characterized in that** the insulating strips (37, 38) have projections on the top and/or bottom sides which, in the insulating position, at least partially, preferably completely cover the top and bottom sides of the heating blade (29) in the waiting position.

## Revendications

1. Machine (1) pour le traitement thermique de pièces en plastique en matière résine, en particulier des plaques en matière plastique, avec un support pour la pièce en plastique ou les pièces en plastique et au moins une lame chauffante (29), qui est guidée de manière mobile entre une position d'attente à l'extérieur de la zone du support et une position de chauffage dans la zone du support et qui présente deux surfaces latérales opposées l'une à l'autre et un côté supérieur et inférieur, un dispositif de recouvrement (35, 36) pour recouvrir la lame chauffante (29) en position d'attente étant prévu dans la zone de la position d'attente, le dispositif de recouvrement comportant deux bandes isolantes (37, 38) disposées des deux côtés de la lame chauffante (29), qui peuvent être déplacées au moyen d'un entraînement (39, 40) d'une position de départ espacée de la lame chauffante (29) dans une position isolante, **caractérisé en ce que** les bandes isolantes (37, 38) reposent contre les surfaces latérales de la lame chauffante (29) dans la position isolante et recouvrent ainsi les surfaces latérales au moins essentiellement complètement.

2. Machine selon la revendication 1, **caractérisée en ce que** la machine est conçue comme une machine à souder bout à bout (1) pour souder les faces d'extrémité de pièces en matière plastique, qui est munie de deux dispositifs de serrage opposés (15), 16) pour la fixation et le rapprochement des pièces en matière plastique à souder dans un plan de serrage, les dispositifs de serrage formant une fente entre eux et étant mobile relativement l'un à l'autre, l'au moins une lame chauffante (29) s'étendant le long de la fente et se trouvant à l'extérieur du plan de serrage en position d'attente et dans la zone du plan de serrage en position de chauffage.

3. Machine selon la revendication 1, **caractérisée en ce que** la machine est conçue comme une machine à plier pour plier une pièce en plastique en forme de plaque autour d'une ligne de pliage, la machine à plier comportant un dispositif de pliage auquel la lame chauffante ou deux lames chauffantes opposées sont associées de telle sorte que, dans la position de chauffage, la pièce en plastique peut être chauffée dans la zone de la ligne de pliage.

4. Machine selon l'une des revendications 1 à 3, **caractérisée en ce que** les bandes isolantes (37, 38) présentent, côté lame chauffante, un matériau isolant (43, 44), constitué en particulier de polytétrafluoroéthylène.

5. Machine selon la revendication 4, **caractérisé en ce que** le matériau isolant (43, 44) est enfermé sur ses côtés éloignés de la lame chauffante (29) par un support (41, 42).

6. Machine selon l'une des revendications 1 à 5, **caractérisée en ce qu'au** moins un entraînement linéaire, en particulier un cylindre pneumatique (39, 40), est prévu comme entraînement.

7. Machine selon l'une des revendications 1 à 6, **caractérisée en ce qu'**un entraînement linéaire (39, 40) est prévu pour chaque bande isolante (37, 38).

8. Machine selon la revendication 7, **caractérisée en ce que** les entraînements linéaires (39, 40) ont une course linéaire dont la direction s'étend perpendiculairement aux deux faces latérales de la lame chauffante (29).

9. Machine selon l'une des revendications 1 à 8, **caractérisée en ce que** les bandes isolantes (37, 38) présentent des saillies sur les côtés supérieur et/ou inférieur qui, dans la position isolante, recouvrent au moins partiellement, de préférence complètement, les côtés supérieur et inférieur de la lame chauffante (29) en position d'attente.
